# EUROPÄISCHE PATENTSCHRIFT

(11) **EP 0 631 992 B1**
(45) Veröffentlichungstag und Bekanntmachung des Hinweises auf die Patenterteilung: **29.01.1997**
(21) Anmeldenummer: 94108597.9
(22) Anmeldetag: 06.06.1994
(51) Int. Cl.: C03B 7/06

(54) **Verfahren und Vorrichtung zum Konditionieren und Homogenisieren eines Glasstromes**
Method and apparatus for conditioning and homogenising a glass stream
Procédé et appareil pour le conditionnement et l'homogénéisation d'un courant de verre

(30) Priorität: 15.06.1993 DE 4319773; 02.05.1994 DE 4415148
(43) Veröffentlichungstag der Anmeldung: 04.01.1995
(73) Patentinhaber: Beteiligungen Sorg GmbH & Co. KG, D-97816 Lohr (DE)
(72) Erfinder: Sorg, Helmut, Dipl.-Ing., D-63864 Glattbach (DE); Sims, Richard, D-97816 Lohr am Main (DE)
(74) Vertreter: Zapfe, Hans, Dipl.-Ing.

(56) Entgegenhaltungen:
- US-A- 1 845 824
- US-A- 1 986 575
- US-A- 3 133 803
- US-A- 3 248 203
- US-A- 3 645 712
- US-A- 4 854 960

## Beschreibung

Die Erfindung betrifft ein Verfahren zum Konditionieren und Homogenisieren eines kontinuierlich fließenden Glasstromes aus Farbglas, insbesondere aus Braunglas oder Grünglas, in einer Behandlungsstrecke, die in einem Vorherd zwischen einer Einlaufstelle und einer Entnahmestelle angeordnet ist und aus mindestens einer Kühlzone und einer dieser nachgeschalteten Homogenisierungszone für die Glastemperatur besteht, wobei in der Behandlungsstrecke die Glastemperatur von einer Einlauftemperatur T₁ auf eine Entnahmetemperatur T₂ abgesenkt wird, vorzugsweise zum Herstellen von Formglasteilen wie Hohlglasteilen und Preßglasteilen.

Während die Prozeßtemperaturen beim Erschmelzen von Glas von dessen Zusammensetzung, vom Produktionsverfahren und von anderen Faktoren abhängen, liegen die zur Verarbeitung des Glases erforderlichen Temperaturen in der Regel niedriger als die Schmelztemperaturen bei der Herstellung des Glases. Demzufolge muß das Glas zwischen seiner Herstellung und Verarbeitung abgekühlt werden. Die Abkühlung des Glases ist ein Teil der sogenannten "Konditionierung", bei der das Glas für die Verarbeitung aufbereitet wird. Ebenfalls zur Konditionierung des Glases gehört das Erreichen eines für den in Frage kommenden Verarbeitungsprozeß erforderlichen Grades an thermischer Homogenität.

Die Konditionierung des Glases kann erst dann vorgenommen werden, wenn das Glas das eigentliche Schmelzaggregat bereits verlassen hat. Einige Entwicklungen der allerletzten Zeit haben die Situation in bezug auf das Abkühlen des Glases entscheidend verändert.

Im Bereich der Schmelzwannen wurde durch verschiedene Maßnahmen die spezifische Schmelzleistung, d.h. die auf die Fläche des Schmelzbereichs bezogene Leistung, wesentlich erhöht. Entsprechend gestiegen ist damit auch die Temperatur des aus der Schmelzwanne abgezogenen Glases. Auch andere Hilfsmittel, durch die die Glastemperatur am Boden der Schmelzwanne erhöht wird, wie z. B. Bubbler oder Bodenheizungen führen meist zu einer Steigerung der Austrittstemperatur des Glases aus der Schmelzwanne.

Auch die Glas-Verarbeitungsmaschinen wurden ständig weiterentwickelt, um u. a. den Durchsatz zu steigern. Während noch in den Sechziger und Siebziger Jahren Maschinen zur Massenherstellung von Hohlgläsern mit 6, 8 oder 10 Stationen für jeweils zwei Tropfen versehen waren, haben größere Maschinen heutzutage 12 bis 16 Stationen für jeweils zwei Tropfen oder zehn Stationen für jeweils drei oder vier Tropfen. Dadurch hat sich die Durchsatzleistung einer einzelnen Maschine ganz erheblich erhöht. Die vorstehend beschriebenen Einflüsse haben dazu geführt, daß die gesamte Wärmemenge, die dem Glas nach dem Verlassen der Schmelzwanne und vor der Verarbeitung entnommen werden muß, erheblich gestiegen ist. Die Steigerung des Durchsatzes der einzelnen Maschinen hat die Verweilzeit des Glases in den der Schmelzwanne nachgeschalteten Teilen der Anlage verringert. Dies führt zu dem konträren Sachverhalt, daß eine größere Wärmemenge innerhalb einer geringeren Zeit abgeführt werden muß. Daraus ergibt sich, daß die Produktivität der gesamten Linie ganz erheblich von der Kühlleistung innerhalb der Behandlungsstrecke abhängt. Hierbei müssen allerdings erneut zahlreiche technische Probleme beachtet werden.

Das Fließen des Glases in Vorherden, die im allgemeinen die Grundform eines Kanals aufweisen, erfolgt aufgrund der relativ hohen Viskosität des Glases in Form einer laminaren Strömung. Typischerweise bildet sich dabei im Glasbad ein Geschwindigkeitsprofil aus, bei dem das Maximum etwa in der Mitte des Strömungskanals bzw. an der Glasoberfläche liegt. Aufgrund der Abhängigkeit der Viskosität von der Temperatur der Glasschmelze existiert eine Wechselwirkung zwischen der Glastemperatur, den Wärmeverlusten und der Fließgeschwindigkeit des Glases. Bei örtlich herabgesetzter Geschwindigkeit werden die Wärmeverluste durch Erhöhung der Verweilzeit vergrößert. Dadurch sinkt die Temperatur weiter ab, und durch die dadurch bedingte Erhöhung der Viskosität verringert sich die örtliche Fließgeschwindigkeit noch weiter.

Die Verringerung der Strömungsgeschwindigkeit in einem Bereich führt bei gleichbleibender Durchsatzmenge zwangsläufig zur Erhöhung der Strömungsgeschwindigkeiten in anderen Bereichen mit höheren Glastemperaturen. Damit wiederum wird die Verweilzeit in den Bereichen mit höherer Temperatur und dadurch die effektive Kühlleistung reduziert. Aus diesem Grunde muß die Wirkung eines Kühlsystems möglichst genau definierbar sein, und innerhalb der Kühlzone sollen möglichst Bereiche vermieden werden, in denen geringe Strömungsgeschwindigkeiten auftreten. Durch Bereiche mit niedrigen Temperaturen und höheren Viskositäten tritt wirkungsmäßig eine Verengung des Strömungsquerschnitts ein, was wiederum zu einem erhöhten Gefälle des Glasstandes zwischen der Schmelzwanne und der Entnahmestelle führt. Dies kann wiederum Produktionsstörungen zur Folge haben.

Außerdem muß hierbei berücksichtigt werden, daß die Abkühlung von Gläsern bestimmter Zusammensetzung unterhalb bestimmter Grenztemperaturen, die von der Glaszusammensetzung abhängig sind, zur Bildung von Kristallen führen kann, ein Vorgang, der als "Entglasung" bezeichnet wird. Auch dieser Vorgang kann die Produktion empfindlich stören. Infolgedessen ist beim Einsatz einer Kühlstrecke die Abkühlung des Glasbades auf Temperaturen unterhalb der Entglasungstemperatur möglichst zu vermeiden. Da wiederum die Kristallbildung sowohl von der Temperatur als auch von der Zeit abhängig ist, spielt die Verweilzeit des Glases in dem kritischen Temperaturbereich zusätzlich eine wesentliche Rolle.

Der Wärmetransport im Glasbad selbst findet fast ausschließlich durch Strahlung statt, wobei die Transportgeschwindigkeit von der Zusammensetzung des Glases abhängig ist. Beispielsweise bewirkt die Anwesenheit von zweiwertigem Eisen oder Chrom, die zur Färbung von grünem Glas eingesetzt werden, eine Herabsetzung des Wärmetransports im Glasbad im Vergleich beispielsweise zu einem Kalk-Natron-Weißglas. Dies hat zur Folge, daß der Wärmetransport aus den unteren Bereichen des Glasbades verzögert wird. Eine Kühlung der unteren Bereiche des Glasbades ist aber unerläßlich. Erfolgt die Kühlung zu einem zu späten Zeitpunkt, so wird kein effektiver Kühleffekt mehr in den unteren Bereichen des Glasbades beobachtet.

Es sind zahlreiche Kühlsysteme bekannt geworden, bei denen der Wärmetransport durch Strahlung überwiegt. Diese Art des Wärmeentzugs ist deswegen vorteilhaft, weil dadurch die Wärme nicht unmittelbar von der Glasoberfläche entnommen wird, sondern von einer Schicht, deren Stärke von der Strahlungsdurchlässigkeit des Glases abhängt. Das Stefan-Boltzmann-Gesetz bietet eine Berechnungsgrundlage für die durch Strahlung transportierten Wärmemengen. Ein wesentlicher Faktor ist dabei der Temperaturunterschied zwischen Strahler und Empfänger. In der für die Glasindustrie typischen Anwendung ist die Temperatur des Glases als Strahler vorgegeben. Aus diesem Grunde ist die Temperatur des Empfängers für die abgezogene Wärmemenge ausschlaggebend.

Durch die US-A-4 854 960 ist es bekannt, oberhalb der durchbrochenen Decke eines Vorherdes zur Aufnahme der Wärmestrahlung der Glasschmelze Kühlkanäle vorzusehen, die aus einer bestimmten Eisen-Chrom-Aluminium-Legierung bestehen. Ausführungen über die Tiefe des Schmelzbades werden nicht gemacht. Die bekannte Vorrichtung ist für einen verhältnismäßig geringen Glasdurchsatz von 10 bis 60 Tonnen pro Tag vorgesehen. Anregungen für den Bau und Betrieb von Arbeitswannen und Verteilerkanälen sind dieser Schrift nicht zu entnehmen.

Durch die US-A-3 133 803 ist es bekannt, am Ende eines Vorherdes unmittelbar vor dem Speiserkopf mit der Entnahmestelle Deckenbeheizungen und Bodenkühlungen vorzusehen, die gemeinsam oder alternativ betrieben werden können. Bei dieser Vorrichtung fehlt jedoch eine nachgeschaltete Homogenisierungszone, so daß sich bei hohem Glasdurchsatz erhebliche Temperaturdifferenzen zwischen der Schmelzenoberfläche und der Bodenströmung einstellen können. Anregungen für den Bau und die Betriebsweise von Arbeitswannen oder Verteilerkanälen sind auch dieser Druckschrift nicht zu entnehmen.

Durch die US-A-3 248 203 ist es bekannt, über nahezu die gesamte Länge eines Vorherdes in dessen Boden Kühlkörper vorzusehen, die aus dem Boden hervorstehen, parallel zur Strömungsrichtung des Glases verlaufen und die Glasströmung gewissermaßen in zwei Teilströmungen unterteilen. Hiermit ist es zwar möglich, dem Zentrum des Glasstromes eine große Wärmemenge zu entziehen, in Folge des Fehlens einer nachgeschalteten Homogenisierungszone ist es jedoch nicht mehr möglich, große Temperaturgradienten in der Glasschmelze in vertikaler und horizontaler Richtung auszugleichen. Soweit Badtiefen angegeben sind, handelt es sich nur um den Abstand zwischen dem Schmelzenspiegel und der Oberseite der Kühlkörper. Dieser Abstand wird mit beispielhaft 2,54 cm angegeben. Der bekannte Vorherd, der vorzugsweise für die Herstellung von Glasfasern vorgesehen ist, kann keine Anregungen für Bau und Betriebsweise von Arbeitswannen und Verteilerkanälen geben.

Durch die US-PS 3 645 712 ist es bekannt, in einem Vorherd eine Reihe von wassergekühlten Platten vorzusehen, deren Breite und deren Abstand von der Schmelze so gering sind, daß sie nur die Mitte des Glasstromes und nur dessen Oberfläche sehr intensiv kühlen. Der besagte Abstand kann zwischen 1,27 und 15,24 cm variiert werden. Dadurch ergibt sich in einer Meßreihe, die 7,62 cm unter der Badoberfläche und quer zur Strömungsrichtung liegt, in Verbindung mit einer zusätzlichen Luftkühlung jeweils ein stark wellenförmiger Temperaturverlauf, der in der Mitte ein ausgeprägtes Minimum aufweist, wobei zwischen Minima und Maxima Temperaturdifferenzen zwischen etwa 6 und 18 °C liegen. Dieses Temperaturprofil setzt sich auch zumindest auf einem Teil des Weges in der sich anschließenden Homogenisierungszone fort. Die Badtiefe beträgt an der Meßstelle etwa 40 cm, so daß der bodennahe Bereich der Schmelze nicht wirksam an der Kühlung teilnimmt und ein erheblicher Temperaturgradient von der Badoberfläche zum Boden zu erwarten ist. Hieran wird auch durch eine am Anfang des Vorherdes vorgesehene schwellenförmige Bodenerhebung nichts wesentliches geändert, die sich nur über etwa die Hälfte der Länge der Kühlzone erstreckt und über der eine Badtiefe von etwa 25 cm angenommen werden kann. Außerdem ist angegeben, daß das Bad eine erhebliche Tiefe aufweisen soll. Mit zunehmendem Abstand der Kühlplatten von der Badoberfläche flacht sich zwar das Temperaturprofil ab, jedoch wird dann den Heizgasen ein zunehmend größer werdender Anteil an Wärme entzogen, wodurch sich der thermische Wirkungsgrad des Vorherdes verschlechtert.

Durch die US-PS 2 888 781 ist es bekannt, etwa in der Mitte der Länge eines Vorherdes mit ansonsten gleicher Badtiefe eine wannenförmige Vertiefung vorzusehen, in der eine Kühlschlange, Rührwerkzeuge und Heizelektroden vorgesehen sind, wodurch eine Homogenisierung der Glastemperatur erreicht werden soll. Selbst wenn dies gelingt, tritt in einer sich anschließenden Kühlzone, die aus einer in der Speiserdecke angeordneten Strahlungsöffnung großer Länge besteht, wieder eine Störung der vorausgegangenen Homogenisierung ein. Die Temperatur wird dabei von 1316 bis 1371 °C auf 1116 °C abgebaut. Die Länge der sich anschließenden Homogenisierungszone bis zum Becken mit der Entnahmestelle ist dabei kürzer als die Länge der Strahlungsöffnung.

Durch die US-PS 4 029 488 ist es weiterhin bekannt, am Eintrittsende der Glasschmelze in einen Vorherd in dessen Boden Kühlkörper vorzusehen, die vom Glas überströmt werden und dadurch eine intensive Kühlung bewirken sollen. Am Anfang des Vorherdes sind in dessen Bodenmitte in Reihe zwei Kühlkörper angeordnet, und erst danach folgen zwei weitere Kühlkörper, die nebeneinander angeordnet sind. Dadurch findet der stärkere Kühleffekt erst mit einiger Entfernung vom Einlauf in den Vorherd statt. Durch derartige Kühlkörper wird Wärme nur aus der unmittelbar angrenzenden Schicht entzogen, die sich gezwungenermaßen am Boden des Kanals befindet. In der Praxis ist eine Bewegung dieser Schicht schwierig durchzuführen, und zwar auch dann, wenn Rührwerke verwendet werden. Außerdem hat der Füllstand eine beträchtliche Höhe, so daß es schwierig ist, eine auch nur einigermaßen gleichmäßige Temperaturverteilung zu erreichen. Die Rührer können nämlich wegen des dann auftretenden Verschleißes nicht so tief angeordnet werden, daß die kalte Bodenschicht aufgenommen werden könnte.

Durch die DE-PS 25 07 015 ist es weiterhin bekannt, in der Schmelzwanne selbst, zwischen einem Schmelzabschnitt und einem Läuterungsabschnitt hoher Temperatur einerseits und einer Läuterungszone niedrigerer Temperatur andererseits wassergekühlte Rührvorrichtungen vorzusehen, um die Homogenisierung zu steigern und die Qualität des Glases zu verbessern. Dadurch wird aber eine größere Länge der Schmelzwanne erforderlich, und die Probleme hinsichtlich einer weiteren Kühlung und Homogenisierung der Temperatur in den sich an die Schmelzwanne anschließenden Aggregaten zur Weiterverarbeitung des Glases werden nicht gelöst.

Schließlich ist es durch die DE-OS 31 19 816 bekannt, einen Speiser in fünf Zonen zu unterteilen, von denen die beiden ersten eine Schnellkühlzone und eine Feinkühlzone sind. Die dritte Zone ist eine Rührzone, in der die Glasschmelze mechanisch umgerührt wird, und die vierte Zone ist eine Ausgleichszone zur Homogenisierung der Temperatur vor dem Eintritt des Glases in die fünfte Zone, in der der übliche Tropfen gebildet wird. Sowohl in der Schnellkühlzone als auch in der Feinkühlzone sind geschlossene Deckenkanäle und Bodenkanäle für die wahlweise oder gleichzeitige Führung eines Kühlmedium vorgesehen. Der Wärmeentzug pro Längeneinheit der beiden Kühlzonen ist jedoch nach wie vor begrenzt, so daß der Glasstrom in einem mäanderförmigen Kanal geführt wird, in dem sich zusätzliche Elektroden zur Aufheizung des Glases in den sogenannten "tote Ecken" befinden. Kühlung und zusätzliche Beheizung der Glasschmelze müssen also gleichzeitig durchgeführt werden, so daß erhebliche Wärmemengen unmittelbar von den zusätzlichen Heizzonen zu den Kühlzonen abgeführt werden.

Durch das Buch von Doyle "GLASS-MAKING TODAY" 1979, Portcullis Press, Redhill/GB, S. 199/200, ist es bekannt, bei einem Vorherd mit Blasluftkühlung der Schmelze eine Badtiefe von 152 mm vorzusehen, wobei die Badbreite bei einem Durchsatz bis zu 90 Tonnen pro Tag 91,4 cm und bei einem Durchsatz bis zu 150 Tonnen pro Tag 122 cm betragen soll. Es kann angenommen werden, daß diese Parameter bei Weißglas zu der geforderten Homogenisierung der Temperatur ausreichen; auf Farbglas finden sich keine Hinweise.

Durch den Aufsatz von Sims "Increased Conditioning Time Leads to Improved Thermal Homogeneity", veröffentlicht in "GLASS INDUSTRY", November 1991, Seiten 8 bis 15, ist es bei einem Vorherd mit einem Durchsatz von 70 Tonnen Grünglas pro Tag bekannt, die Temperatur im ersten Drittel von 1290 °C auf 1180 °C, also um 110 °C, abzusenken und in der sich anschließenden Homogenisierungszone bis unmittelbar vor dem Becken mit der Entnahmestelle - in Strömungsmitte von oben nach unten in 25 mm, 75 mm und 125 mm Tiefe gemessen - soweit zu homogenisieren, daß die maximale Temperaturdifferenz 4 °C beträgt, was für den gegebenen Durchsatz an Grünglas als ein sehr guter Wert bezeichnet werden muß. Alle anderen Messungen wurden nur 25 mm unter der Badoberfläche durchgeführt. Nachträgliche Messungen und Berechnungen haben ergeben, daß die Einlauftemperatur der Schmelze in die Kühlzone 20 mm über dem Boden etwa 1220 °C beträgt und daß die Temperatur knapp über dem Boden der Kühlzone nur auf etwa 1210 °C abgesenkt werden kann, also nur um etwa 10 °C. Dadurch wird im Mittel nur eine relativ geringe Energiemenge abgeführt.

Bei größeren Durchsätzen und/oder bei der Notwendigkeit eines Abbaus größerer Temperaturdifferenzen läßt sich jedoch weder die größere Energiemenge abführen, noch läßt sich die erforderliche Homogenität in der Temperaturverteilung erreichen, und zwar ganz einfach deswegen, weil die tieferen Schichten der Glasströmung nicht mehr in ausreichendem Maße an der Wärmeabfuhr durch Strahlung teilnehmen. Die in Längsrichtung des Vorherdes gemessene Temperaturkurve wird flacher und verschiebt ihr Minimum zu Lasten der Homogenisierungszone in Richtung der Entnahmestelle.

Nun wäre es denkbar, bei gegebener Badtiefe von 15 cm die Kanalbreite proportional zur Durchsatzsteigerung zu vergrößern. Hierbei stößt man jedoch rasch an konstruktive Grenzen, und außerdem vergrößert sich ohne zusätzliche Randbeheizung die Temperaturdifferenz zwischen den beiden Randströmungen und der Mittelströmung (das waagerechte Temperaturprofil entspricht ebenso wie das waagerechte Geschwindigkeitsprofil einer Parabel). Dies verschlechtert den thermischen Wirkungsgrad, da auch diese Wärme letztendlich wieder abgeführt werden muß.

Da eine Vergrößerung der Badtiefe über 15 cm hinaus aus den genannten Gründen ausscheidet, wäre es naheliegend, bei der gegebenen Badtiefe mindestens teilweise die Strömungsgeschwindigkeit zu erhöhen und die Kühlzone entsprechend zu verlängern, um die Verweilzeit der Schmelze in der Kühlzone beizubehalten.

Eine Verstärkung der Oberflächenkühlung allein führt aus den gleichfalls bereits genannten Gründen nicht zum Erfolg, weil der Temperaturgradient von oben nach unten zunimmt: Unter einer relativ kühlen Oberflächenschicht mit höherer Viskosität strömt eine heißere und wegen der niedrigeren Viskosität schnellere Bodenschicht. Dieser Effekt kann auch durch eine noch so lange Kühlzone nicht kompensiert werden. Man ist also gezwungen, nach einem Kompromiß zu suchen.

Die Verhältnisse sind besonders ungünstig bei Braunglas und Grünglas, die die längerwellige Wärmestrahlung in erheblichem Umfange absorbieren. So weist Trier in seinem Buch "Glasschmelzöfen", Springer-Verlag, 1984, auf den Seiten 211/212 anhand eines Diagramms darauf hin, daß die Strahlungsleitfähigkeit von Braunglas und Grünglas bei einer Temperatur von 1300 °C nur etwa 1/4 bis 1/6 der Strahlungsleitfähigkeit von Weißglas (Wirtschaftsglas, Fensterglas) beträgt. Daraus resultieren erheblich verschlechterte Abkühlbedingungen mit zunehmender Badtiefe und zunehmender Glasfärbung. Dies aber führt in analoger Weise zur Ausbildung eines zunehmend steigenden Temperaturgradienten zwischen Badoberfläche und dem Bodenbereich des Bades. Zum Ausgleich derartiger Vorgänge würden außerordentlich lange Homogenisierungszonen mit entsprechend großer Energiezufuhr benötigt, wobei schon der Platzbedarf nicht befriedigend gelöst werden kann. Wie bereits gesagt, werden die Probleme mit zunehmender Färbung des Glases um ein Vielfaches, d.h. um den Faktor 4 bis 6, verschärft.

Nun könnte man zur Beseitigung des Problems daran denken, die gesamte Badtiefe im Vorherd oder Speiser entsprechend zu verringern, um den negativen "Tiefeneffekt" zu kompensieren. Diese Maßnahme würde aber aufgrund der temperaturabhängigen Viskosität der Schmelze und des in hochviskosen Flüssigkeiten entstehenden Strömungsprofils zur Ausbildung eines Gefälles führen, dessen Höhendifferenz mit zunehmendem Durchsatz steigt, und genau dieser hohe Durchsatz wird bei modernen Glasschmelzanlagen in zunehmendem Maße gefordert. Die Ausbildung eines Gefälles in einem Vorherd oder Speiser ist aber extrem unerwünscht, weil sich dann an den verschiedenen Entnahmestellen nicht mehr die gleichen Parameter einstellen lassen.

Der Erfindung liegt daher die Aufgabe zugrunde, ein Verfahren der eingangs beschriebenen Gattung anzugeben, durch das bei hohem Durchsatz an Farbglas durch den Vorherd und/oder bei der Notwendigkeit des Abbaus größerer Temperaturdifferenzen sowohl ein starker Kühleffekt als auch ein guter Homogenisierungseffekt erzeugt werden. Wie eingangs aufgezeigt wurde, stehen sich diese Forderungen gewissermaßen diametral entgegen.

Die Lösung der gestellten Aufgabe erfolgt bei dem eingangs angegebenen Verfahren erfindungsgemäß dadurch, daß in der mindestens einen Kühlzone bei einem Durchsatz von mindestens 70, vorzugsweise von mindestens 90, Tonnen pro Tag durch eine sich über die Länge der Kühlzone erstreckende schwellenförmige Erhebung des Bodens eine maximale Badtiefe Tₘₐₓ von 120 mm eingestellt wird, und daß in der Kühlzone die Kühlleistung so eingestellt wird, daß in der Kühlzone und vor dem Eintritt in die Homogenisierungszone die Temperatur 20 mm über dem Boden um mindestens 40 °C, vorzugsweise um mindestens 50 °C, verringert wird.

Vereinfacht ausgedrückt besteht die Erfindung darin, am Anfang des Vorherdes im Bereich der Kühlzone(n) durch mindestens eine schwellenförmige Bodenerhebung örtlich begrenzt einen möglichst niedrigen Füllstand der Glasschmelze zu erzeugen, in diesem Bereich des niedrigen Füllstandes möglichst viel Wärme abzuführen, so daß bei gegebener Länge der Behandlungsstrecke eine möglichst lange Homogenisierungszone zur Verfügung steht, in der ein Ausgleich der restlichen Temperaturdifferenzen herbeigeführt werden kann. Außerhalb der flachen Kühlzone(n) aber soll wieder eine größere Badtiefe vorliegen, um der Ausbildung langer Gefällstrecken entgegenzuwirken.

Ein Vergleich mit dem Stande der Technik möge die Energiemengen, die **bei Grünglas** pro Stunde abgeführt werden können, erläutern, wobei von einer Einlauftemperatur T₁ von 1280 °C in einen Vorherd ausgegangen wird:

**Tabelle I**

| Beispiel | Durchsatz tato | Temperaturabbau °C | Energie pro Stunde Kcal/h | max. Abweichung °C |
|---|---|---|---|---|
| 1 *) | 70 | 80 | 82.000 | 4 - 5 |
| 2 *) | 70 | 100 | 102.000 | 4 |
| 3 **) | 90 | 120 | 160.000 | 4 |
| 4 **) | 160 | 160 ***) | 375.000 | 4 |

| | | | | |
|---|---|---|---|---|
| *) = Vergleichsbeispiele aus "Sims" Badtiefe T_{B} = 150 mm | | | | |
| **) = Badtiefe T_{B} = 120 mm | | | | |
| ***) = bei Glas für Sektflaschen, 700 ml Tᵥ (Verarbeitungstemperatur) = 1120 °C Portionsgewicht (Glastropfen) = 950 g | | | | |

Eine Erhöhung der Kühlleistung durch Vergrößerung der Abstrahlungsöffnungen allein, d.h. bei unveränderter Badtiefe, ermöglichte nicht den erforderlichen Temperaturabbau und führte auch nicht zu der gewünschten Temperaturhomogenität. Erst die Verbindung mit der erfindungsgemäßen, örtlich begrenzten Verringerung der Badtiefe durch die schwellenförmige Bodenerhebung führte zur Erfüllung beider Forderungen.

Auch hierbei wachsen die Vorteile zunächst mit abnehmender Tiefe, dann z. B., wenn die maximale Tiefe Tₘₐₓ auf 100 mm, 80 mm oder darunter noch weiter verringert wird. Zwischenwerte sind dabei ohne weiteres möglich.

Die angegebenen geringen Badtiefen sind bei den heute geforderten hohen Durchsätzen keineswegs selbstverständlich. Ihnen steht nämlich der Effekt entgegen, daß sich über die Länge der Kühlzone und des übrigen Strömungsweges ein von der Strömungsgeschwindigkeit abhängiges Gefälle einstellt, und die Strömungsgeschwindigkeit und damit das Gefälle nehmen mit geringerer Badtiefe stark zu.

Es versteht sich, daß in allen Fällen Mindesttiefen nicht unterschritten werden können. Diese lassen sich jedoch experimentell bestimmen.

Der erfindungsgemäße Gedanke zielt mithin in Richtung einer "Dünnschichtkühlung", so daß es möglich ist, mit den an sich bekannten Kühlsystemen auf relativ kurzem Wege außerordentlich große Wärmemengen abzuziehen, die in Relation zu der Temperaturdifferenz zwischen T₁ und T₂ zu setzen sind.

Die Temperatur T₁ ist diejenige am Ausgang des Verteilerkanals bzw. am Eintritt in den/die Vorherd(e) 20 mm unter der Badoberfläche und die Temperatur T₂ ist diejenige Temperatur an der ersten oder einzigen Entnahmestelle. Die Temperatur T₁ ist eine Folge der notwendigen Betriebsbedingungen in der Schmelzwanne und liegt üblicherweise, aber beispielhaft, zwischen 1250 und 1400 °C. Die Temperatur T₁ liegt in der Regel um so höher, je höher der Durchsatz bzw. die Leistung der Schmelzwanne ist. Die Temperatur T₂ wird sowohl durch die Glasart als auch durch die Verarbeitungsbedingungen der üblicherweise erzeugten Glastropfen vorgegeben und liegt in der Regel beispielhaft zwischen 1120 und 1180 °C. Die örtliche Abweichung von T₂ sollte dabei möglichst innerhalb eines Toleranzfeldes von ± 4 °C, vorzugsweise von ± 2 ° C liegen.

Die erfindungsgemäße Ausbreitung des Strömungsquerschnitts über eine große Breite bei geringer Tiefe (bei gegebenen Durchsatz bzw. bei gegebener Strömungsgeschwindigkeit) ermöglicht eine außerordentlich starke Kühlung auf kürzestem Wege bei gleichzeitiger Verringerung von Unterschieden in der Strömungsgeschwindigkeit und in der Temperatur und damit in der Viskosität. Es treten bereits dann erhebliche Vorteile ein, wenn dem Glasstrom am Anfang der Kühlzone je Meter Strömungsweg mindestens 30 % derjenigen Energiemenge entzogen werden, die der Temperaturdifferenz zwischen T₁ und T₂ entspricht. Es ist jedoch besonders vorteilhaft, wenn durch die Intensivierung der Kühlwirkung dem Glasstrom in der Kühlzone je Meter Strömungsweg mindestens 40 oder nach Möglichkeit mindestens 50 % derjenigen Energiemenge entzogen werden, die der besagten Temperaturdifferenz entsprechen.

Wie bereits gesagt, können für den Wärmeentzug an sich bekannte Maßnahmen bzw. Mittel verwendet werden, wie beispielsweise eine Bodenkühlung durch in den Boden der Behandlungsstrecke eingebaute Kühlkanäle und/oder durch eine bewußt im Bodenbereich verminderte Isolierung. Weiterhin kann alternativ oder zusätzlich eine Oberflächenkühlung vorgesehen werden, wie durch regelbare Deckenöffnungen, und/oder durch Anblasen mit Gasen, beispielsweise mit Luft und/oder durch Kühlkörper, die ohne Berührung mit dem Glasstrom oberhalb des Glasspiegels angeordnet sind. Schließlich ist es möglich, eine Kühlung in der Masse selbst durchzuführen, beispielsweise durch Kühlkörper, die in das Glas eingetaucht sind und die zusätzlich noch die Wirkung von Rührelementen haben können.

Auch für die nachfolgende Homogenisierung der Temperatur in der Glasschmelze können an sich bekannte Mittel vorgesehen werden, wie eine entsprechend lange Homogenisierungszone mit der Voraussetzung einer möglichst vollkommenen Wärmeisolierung gegenüber der Umgebung, durch ungekühlte Rührelemente oder Leitflächen, desgleichen auch durch eine leichte Beheizung der Schmelze von oben durch Strahlung oder innerhalb des Glases durch den elektrischen Glaswiderstand und entsprechende Heizelektroden.

Durch die erfindungsgemäße Dünnschichtkühlung wird erreicht, daß praktisch die gesamte gefärbte Glasmenge vorübergehend im Einflußbereich des Kühlsystems liegt, so daß z. B. auch der Bodenbereich der Glasströmung einer Kühlung z. B. durch merkliche Abstrahlung nach oben hin ausgesetzt wird. Die ansonsten zu beobachtende, sich negativ auswirkende wechselseitige Verstärkung von Temperatur-, Viskositäts-, Verweilzeit- und Strömungsdifferenzen wird damit außerordentlich wirksam unterdrückt.

Von besonderer Bedeutung ist dabei die Anordnung der Kühlzone ganz am Anfang der Behandlungsstrecke, da dort die Temperatur zunächst noch sehr hoch und die Viskosität des Glases sehr niedrig ist.

Durch die erfindungsgemäße Dünnschichtkühlung auf kürzestmöglichem Wege läßt sich erreichen, daß der Strömungsweg der Glasmasse in der Kühlzone im wesentlichen geradlinig verläuft, so daß sogenannte "tote Ecken" und eine Zusatzbeheizung des Glases in diesen toten Ecken vermieden werden können. Außerdem wird dadurch der Aufbau der Kühlzone ganz wesentlich vereinfacht und die Temperaturverteilung bereits in der Kühlzone zu einem großen Teil homogenisiert.

Die Erfindung betrifft auch eine Vorrichtung zur Durchführung des Verfahrens mit einer Behandlungsstrecke, die in einem Vorherd zwischen einer Einlaufstelle und einer Entnahmestelle angeordnet ist und aus mindestens einer Kühlzone und einer dieser nachgeschalteten Homogenisierungszone für die Glastemperatur besteht, wobei der Boden des Strömungskanals im Bereich der Kühlzone gegenüber den Nachbarbereichen des Bodens mit einer schwellenförmigen Erhebung versehen ist.

Zur Lösung der gleichen Aufgabe ist eine solche Vorrichtung dadurch gekennzeichnet, daß sich die Erhebung des Bodens über die gesamte Länge der Kühlzone erstreckt und die konstruktionsbedingte maximale Tiefe Tₘₐₓ des Strömungskanals im Bereich der Kühlzone 120 mm beträgt und daß die Tiefe des Strömungskanals im sich anschließenden Bereich der Homogenisierungszone um mindestens 30 mm tiefer ist.

Bezüglich der Verringerung der Werte über der Bodenerhebung gelten die bereits weiter oben gemachten Ausführungen.

Ausführungsbeispiele des Erfindungsgegenstandes werden nachfolgend anhand der Figuren 1 bis 12 näher erläutert.

Es zeigen:
- Figur 1: eine Draufsicht auf eine schematisch dargestellte Anordnung von Schmelzwanne, Verteilerkanal und drei Vorherden mit je einer Entnahmestelle,
- Figur 2: einen vertikalen Längsschnitt durch eine Kühlzone mit zwei Abstrahlungsöffnungen in der Decke,
- Figur 3: in der linken Hälfte eine Draufsicht von oben auf den Gegenstand nach Figur 2, und der rechten Hälfte einen Schnitt entlang der Linie III-III in Figur 2.
- Figur 4: einen vertikalen Querschnitt durch den Gegenstand von Figur 3 entlang der Linie IV-IV,
- Figur 5: einen vertikalen Längsschnitt durch eine Kühlzone analog Figur 2, jedoch mit einem geschlossenen Kühlkanal in der Decke,
- Figur 6: eine schematisierte Draufsicht auf einen Vorherd,
- Figur 7: einen vergrößerten Ausschnitt aus dem linken Teil von Figur 6,
- Figur 8: einen vertikalen Längsschnitt durch eine Kühlzone, in deren Verlängerung sich ein eingetauchter Kühlkörper in Form einer Barriere befindet,
- Figur 9: in der linken Hälfte eine Draufsicht auf den Gegenstand nach Figur 8, und in der rechten Hälfte einen Schnitt entlang der Linie IX-IX durch den Gegenstand von Figur 8,
- Figur 10: einen vertikalen Querschnitt entlang der Linie X-X durch den Gegenstand von Figur 9,
- Figur 11: ein Diagramm mit Temperaturverläufen an mehreren Meßstellen über die gesamte Länge der Behandlungsstrecke nach dem Stande der Technik und nach der Erfindung und
- Figur 12: ein Diagramm mit den Viskositätsverläufen an mehreren Meßstellen über die gesamte Länge der Behandlungsstrecke.

Die im Schnitt dargestellten Teile bestehen, soweit nichts anderes angegeben ist, aus den üblichen keramischen bzw. mineralischen Ofenbau- und Isolierstoffen.

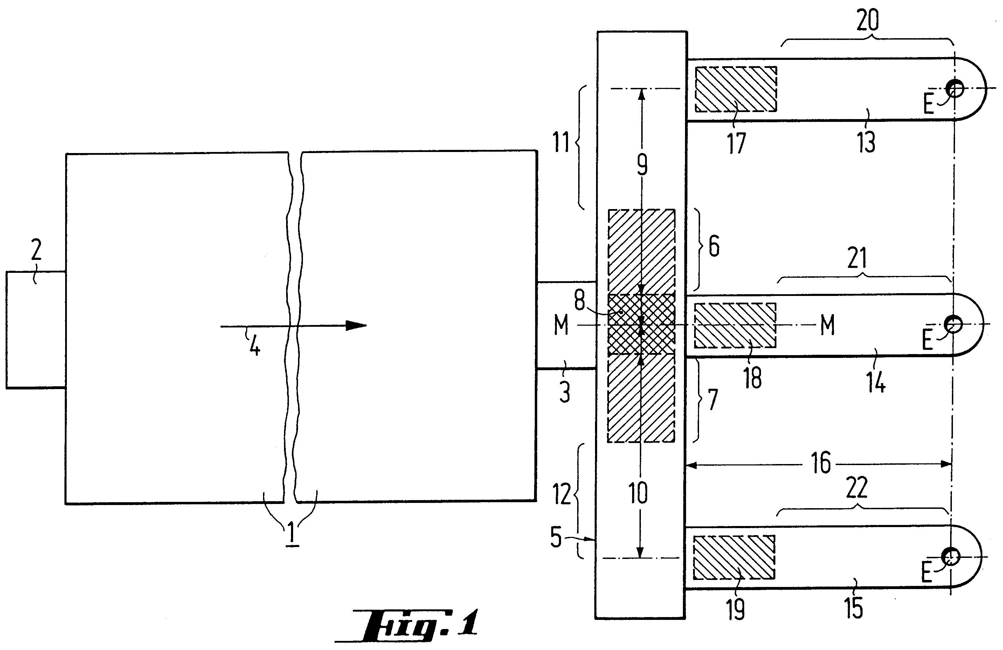

In Figur 1 ist eine Schmelzwanne 1 dargestellt, zu der eine Einlegeöffnung 2 gehört, die in herkömmlicher Weise als "Dog-House" ausgebildet ist, sowie ein Durchlaß 3, durch den die Glasschmelze aus der Schmelzwanne abgezogen wird. Die Glasbildner, die aus dem üblichen Gemenge und aus Scherben bestehen können, sowie das daraus gebildete Glas durchwandern die Schmelzwanne in Richtung des Pfeils 4. Es ist natürlich auch möglich, mehrere Einlegeöffnungen an den beiden Langseiten der Schmelzwanne anzuordnen, wodurch sich ein anderes Strömungsmuster ergibt. Zum Durchlaß 3 kann auch ein sogenannter "Riser" gehören. Derartige Einzelheiten sind Stand der Technik, so daß hierauf nicht näher eingegangen wird.

An den Durchlaß 3 schließt sich ein Verteilerkanal 5 an, der auch als Arbeitswanne ausgebildet sein kann. Bei einem ersten Ausführungsbeispiel befinden sich im Verteilerkanal beiderseits einer Mittenebene M-M zwei Kühlzonen 6 und 7, die einfach schraffiert und durch gestrichelte Linien umrandet sind. Es ist jedoch möglich, diese beiden Kühlzonen zu einer einzigen Kühlzone zu vereinigen, wodurch zusätzlich der kreuzschraffierte Bereich 8 hinzugewonnen wird.

Beiderseits der Mittellinie M-M werden zwei Behandlungsstrecken 9 und 10 gebildet, zu denen die beiden Kühlzonen 6 und 7 und ggf. auch der Bereich 8 gehören. Der restliche Strömungsweg der Glasschmelze bildet alsdann jeweils eine Homogenisierungszone 11 und 12. In den Homogenisierungszonen wird soweit wie irgend möglich eine Homogenisierung der Temperaturverteilung herbeigeführt.

Bei dem zweiten Ausführungsbeispiel sind an den Verteilerkanal 5 drei Vorherde bzw. Speiser 13, 14 und 15 angeschlossen, die jeweils in einer Entnahmestelle E enden. Die Gesamtlänge der Vorherde 13, 14 und 15 bildet bei diesem Ausführungsbeispiel jeweils eine Behandlungsstrecke 16. In jeder dieser Behandlungsstrecken 16 liegt jeweils eine Kühlzone 17, 18 und 19, die schraffiert dargestellt und von gestrichelten Linien umgeben ist. Es wird betont, daß die Darstellung außerordentlich schematisch gehalten ist, um das Verständnis zu erleichtern. Auch im Bereich der Behandlungsstrecken 16 schließt sich an die jeweilige Kühlzone eine Homogenisierungszone 20, 21 und 22 an.

Bei der dargestellten Ausführungsform der Vorherde kann auf die Kühlzonen 6, 7 und 8 im Verteilerkanal 5 verzichtet werden, so daß die Glasschmelze mit einer sehr hohen Temperatur in die Vorherde eintritt.

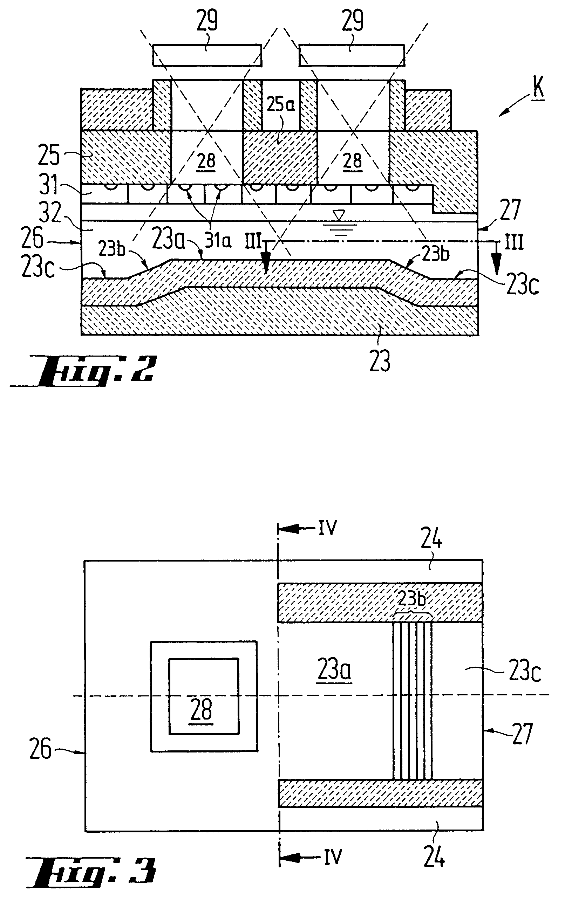

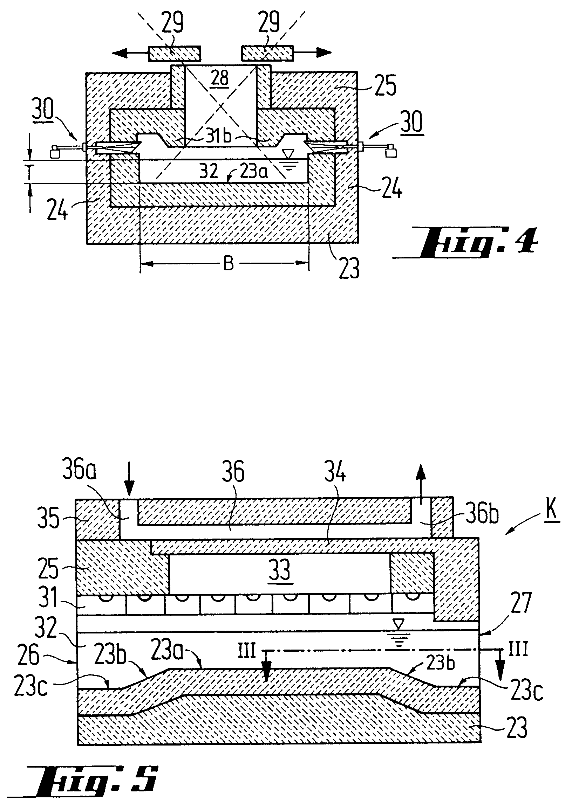

Die Figuren 2, 3 und 4 zeigen in verschiedenen Ansichten und Schnitten eine Kühlzone K, wie sie für die Kühlzonen 17, 18 und 19 in den Vorherden 13, 14 und 15 verwendet wird. Die betreffenden Kühlzonen stellen gewissermaßen einen Abschnitt eines Kanals mit einem Boden 23, Seitenwänden 24 und einer Decke 25 dar. Die Glasschmelze tritt auf der Eintrittsseite 26 ein und aus der Austrittsseite 27 wieder aus. Bei dem Ausführungsbeispiel nach den Figuren 2 bis 4 befinden sich in der Decke 25 zwei schachtförmige Öffnungen 28 mit rechteckigem Querschnitt, die eine Abstrahlung der im Glas gespeicherten Energie zulassen. Um den Energiestrom an die Umgebung zu regeln, sind über den Öffnungen Verschlußelemente 29 angeordnet, durch die die freien Querschnitte der Öffnungen 28 bestimmbar sind. Die Öffnungs- und Schließbewegung ist durch Pfeile angedeutet. In den beiden Seitenwänden 24 befinden sich zwei Reihen von Brennern 30 (Figur 4), deren Mündungen in sogenannten Düsensteinen 31 untergebracht sind. Für den Austritt der Brenngase besitzen die Düsensteine Öffnungen 31a, die in Figur 2 als Halbkreise erkennbar sind, weil in etwa die obere Hälfte durch Rippen 31b verdeckt ist, die sich von der Decke 25 abwärts erstrecken, wie dies etwa in Figur 4 dargestellt ist.

Die Figuren 2 und 3 zeigen, daß der Boden 23 auf einer Länge, die in etwa der Länge der Öffnungen 28 zuzüglich dem dazwischenliegenden Deckenabschnitt 25a entspricht, mit einer Erhebung 23a versehen ist, die sich über die gesamte Breite B des Kanalquerschnitts erstreckt. Die Erhebung 23a bildet gewissermaßen eine Schwelle, die an beiden Enden (in Strömungsrichtung gesehen) über Schrägflächen 23b in das untere Bodenniveau 23c übergeht, wobei die Höhendifferenz mindestens 30 mm beträgt. Es ist deutlich zu erkennen, daß der Glasstrom 32 im Bereich der Erhebung 23a auf den sehr flachen Strömungsquerschnitt reduziert wird, der die hohe Abkühlgeschwindigkeit ermöglicht. An die Austrittsseite 27 schließt sich alsdann die jeweilige Homogenisierungszone an.

Die Figuren 2 und 4 zeigen innerhalb der Deckenöffnungen 28 sich kreuzende, gestrichelte Diagonallinien, die sich außerhalb der Öffnungen 28 fortsetzen. Diese Linien charakterisieren die strahlungsabsorbierende Wirkung des Hintergrundes dieser Öffnungen auf die Glasschmelze 32. Es versteht sich, daß es sich schon im Hinblick auf die unterschiedliche Strahlungsdurchlässigkeit der Glasschmelze aus darunterliegenden Schichten als auch im Hinblick auf den räumlichen Verteilungswinkel der von jedem Punkt der Glasoberfläche ausgehenden Strahlung um keine scharfen Grenzen handelt. Für die Berechnung der effektiven Kühlwirkung der Deckenöffnungen 28, reichen die auf dem Verlauf der Diagonallinien beruhenden Überlegungen jedoch vollständig aus. Es ist erkennbar, daß ein relativ großer Oberflächenbereich der Glasschmelze 32 von der Kühlwirkung der Deckenöffnungen 28 erfaßt wird.

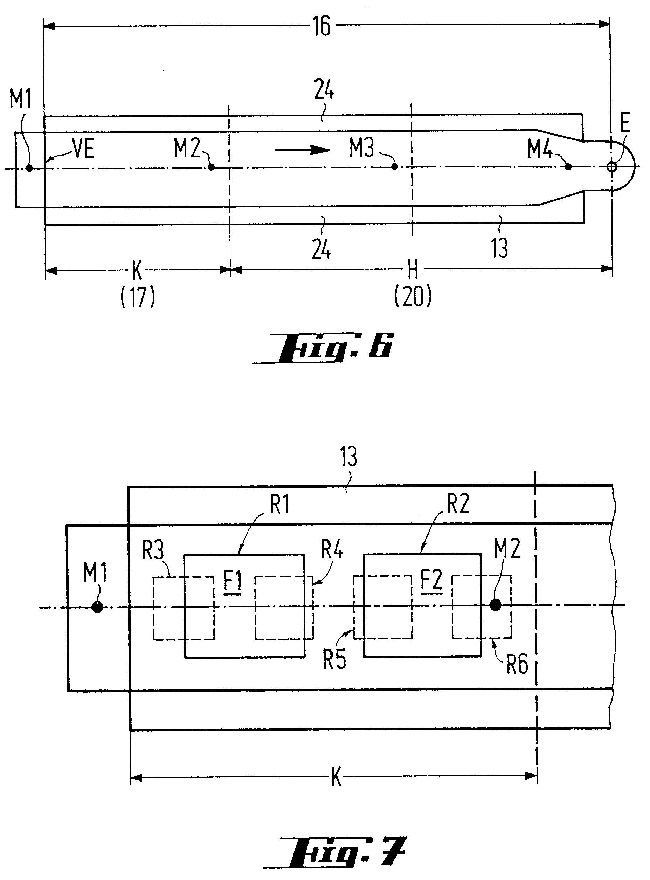

Die Figur 5 zeigt eine Variante der Kühlzone K, bei der eine einzige Ausnehmung 33 in der Decke 25 durch eine Platte 34 verschlossen ist, die in diesem Falle den Strahlungsempfänger für die Wärmestrahlung des Glasstromes 32 darstellt. Oberhalb der Platte 34 befindet sich ein Aufbau 35 mit einem U-förmigen Strömungskanal 36 für die Durchleitung von Kühlluft. Eintrittsende 36a und Austrittsende 36b des Strömungskanals 36 sind nach oben gerichtet; die Strömungsrichtung ist durch Pfeile angedeutet. Durch eine entsprechende Menge an Kühlluft wird die Temperatur der Platte 34 beeinflußt und damit der auf den Glasstrom 32 einwirkende Kühleffekt.

Figur 6 zeigt, daß sich die Länge der Kühlzone K bzw. 17 ziemlich genau über das erste Drittel des Vorherdes erstreckt, während die Restlänge die Homogenisierungszone H bzw. 20 bildet. Es sind in Strömungsmitte folgende Meßstellen eingezeichnet:
- M1 =: unmittelbar vor der Einlaufstelle VE in den Vorherd zur Messung der Einlauftemperatur T₁;
- M2 =: unmittelbar vor dem Ende der Kühlzone K bzw. am Eintritt in die Homogenisierungszone H;
- M3 =: in der Mitte der Homogenisierungszone H und
- M4 =: kurz vor der Entnahmestelle E, die am Boden eines Beckens angeordnet ist, zur Bestimmung der Entnahmetemperatur T₂.

An den Meßstellen M1 und M2 sind Thermofühler 20 mm unter dem Badspiegel und 20 mm über dem Boden angeordnet. An den Meßstellen M3 und M4 befinden sich drei Thermofühler untereinander, und zwar in den Abständen 20 mm, 60 mm und 100 mm unter dem Badspiegel, um die senkrechte Temperaturhomogenität messen zu können.

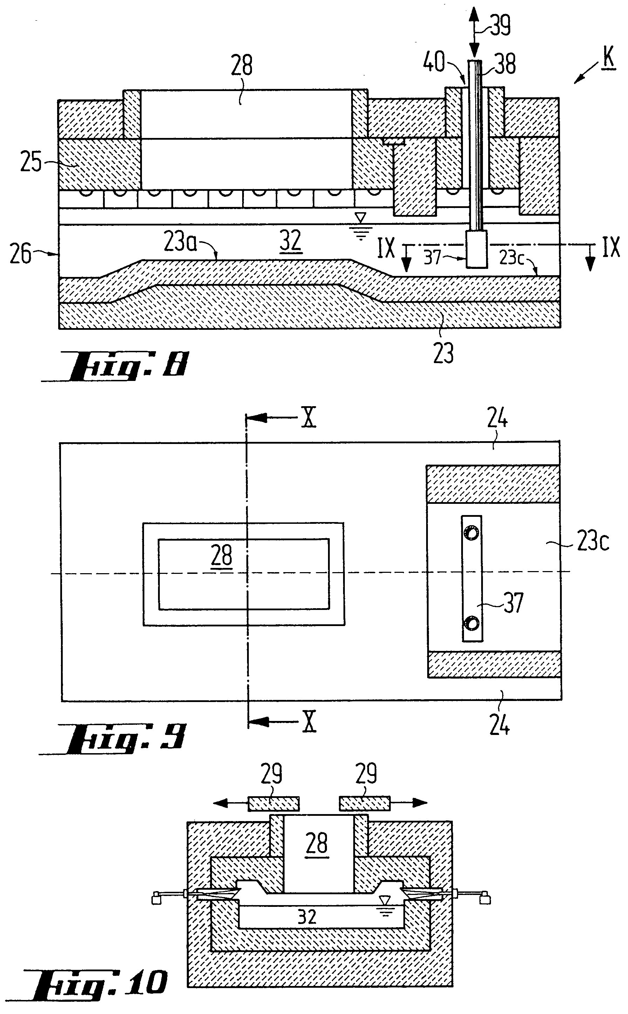

Figur 7 zeigt die Kühlzone K von Figur 6 in vergrößertem Maßstab: Die vier gestrichelt eingezeichneten Rechtecke R3, R4, R5 und R6 zeigen die Öffnungsquerschnitte von vier herkömmlichen Deckenöffnungen analog Ziffer 28 in den Figuren 2 bis 4. Die Summe aller Querschnitte beträgt bei ausgeführten Anlagen (auch nach dem Aufsatz von Sims) maximal etwa 20 % der zur Kühlzone zu rechnenden ebenen Bodenfläche des Vorherdes.

Die beiden durchgezogen dargestellten Rechtecke R1 und R2 verkörpern die Öffnungsquerschnitte F1 und F2 der Deckenöffnungen 28, die erfindungsgemäß mindestens 30 %, vorzugsweise mindestens 40, 50, 60 oder sogar 70 % der durch die Oberfläche FB der schwellenförmigen Bodenerhebung (23a) des Vorherdes definierten Kühlzone betragen. Man kann die Oberfläche FB, die sich aus Länge und Breite des Kanals im Bereich der Bodenerhebung berechnet, auch als Plateaufläche bezeichnen.

Wie bereits gesagt, führt eine Verstärkung der Kühlung allein nicht zum Erfolg, weil unter einer noch langsamer fließenden Oberflächenschicht eine heißere Bodenschicht noch schneller strömt, die sich durch die zusätzliche Verringerung der Verweilzeit auch noch vorzeitig der Kühlung entzieht, wodurch der ungünstige Effekt im Sinne eines noch steileren Temperaturgradienten verstärkt würde.

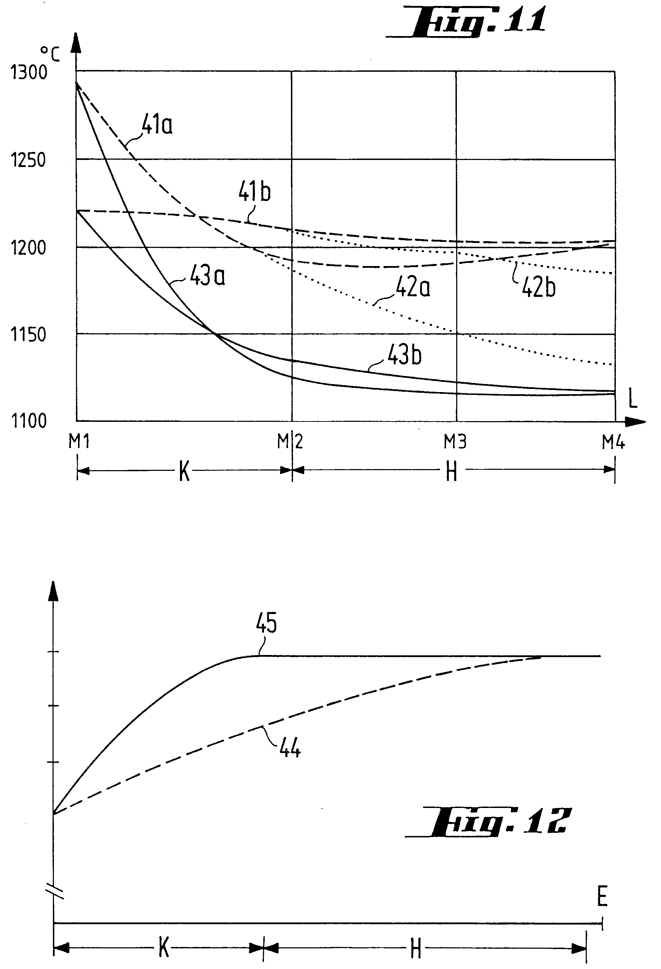

Das Ausführungsbeispiel nach den Figuren 8, 9 und 10 unterscheidet sich dadurch von den Figuren 2 bis 4, daß anstelle zweier Deckenöffnungen 28 nur eine einzige, größere Deckenöffnung 28 vorhanden ist, und daß sich an die Erhebung 23a des Bodens 23 bei ansonsten gleichen geometrischen Verhältnissen wie in den Figuren 2, 3 und 4 ein weiterer Bereich anschließt, in dem sich oberhalb des unteren Bodenniveaus 23c ein Tauchkühler 37 befindet, der über zwei senkrechte Strömungskanäle 38 mit einem Kühlmedium beaufschlagbar ist. Die Strömungskanäle 38 können auch als konzentrische Rohrleitungen ausgeführt sein, was jedoch nicht näher dargestellt ist. Durch Anheben oder Absenken des Tauchkühlers 37 in Richtung des Doppelpfeils 39 läßt sich die Kühlwirkung im oberen und/oder unteren Bereich des Glasstromes 32 variieren. Durch eine periodische Querbewegung (quer zur Glasströmung) läßt sich die Intensität der Kühlung gleichfalls erhöhen. Auch kombinierte Bewegungen des Tauchkühlers sind möglich. Es ist ohne weiteres auch möglich, den Tauchkühler 37 als ausgesprochenes Rührelement auszubilden, um dadurch eine zusätzliche Homogenisierung der Temperatur im Glasstrom herbeizuführen. Die Strömungskanäle 38 sind durch eine Öffnung 40 in der Decke 25 nach außen geführt.

Figur 11 zeigt anhand der Kurven 41a und 41b den Temperaturverlauf 20 mm unter der Badoberfläche und 20 mm über dem Boden über die Länge "L" einer Behandlungsstrecke nach dem Stande der Technik mit gleichbleibender Badtiefe von 150 mm. Auf der Abszisse sind die Meßstellen M1 bis M4 entsprechend den obigen Aussagen angegeben. Es ist zu erkennen, daß sich die Temperatur innerhalb der Kühlzone K knapp unter der Oberfläche nur von 1290 °C auf 1190 °C, d.h. um etwa 100 °C (Kurve 41a), und die Temperatur knapp über dem Boden nur von 1220 °C auf 1210 °C, d.h. um etwa 10 °C (Kurve 41b), absenken läßt, wobei der Abstand an der Meßstelle M2 rund 30 °C beträgt. Diese Differenz konnte bis zur Entnahmestelle E am Ende der Homogenisierungszone weitgehend abgebaut werden, so daß dort eine weitgehend homogene Temperaturverteilung um die 1205 °C vorlag.

Versucht man jetzt im gleichen Vorherd, eine größere Temperaturdifferenz von 170 °C bis auf 1120 °C abzubauen, so gelingt dies auch im oberflächennahen Bereich nur teilweise und unter Zuhilfenahme der Homogenisierungszone bis auf etwa 1135 °C (Kurve 42a). Im bodennahen Bereich gelingt dies nur bis zu einer Temperatur von etwa 1185 °C (Kurve 42b), d.h. es liegt an der Entnahmestelle 3 eine sehr inhomogene Temperaturverteilung mit einem dT von etwa 50 °C vor, das sich in der Homogenisierungszone H nicht mehr abbauen läßt.

Die Kurven 43a und 43b zeigen die analogen Temperaturverläufe beim Erfindungsgegenstand mit verringerter Badtiefe (120 mm) über einer Bodenerhebung und mit verstärkter Kühlleistung. Bereits am Ende der Kühlzone K ist die Temperatur im oberflächennahen Bereich um 165 °C auf 1125 °C verringert, und die Temperatur im bodennahen Bereich wird immerhin von 1220 °C auf 1135 °C, d.h. um 85 °C, abgebaut.

Der Abstand von 10 °C am Ende der Kühlzone K läßt sich jetzt bis zum Ende der Homogenisierungszone H auf etwa 2 bis 3 °C um den Sollwert von 1120 °C verringern. Für andere Einlauf- und Entnahmetemperaturen gelten analoge Verhältnisse. Charakteristisch für das erfindungsgemäße Verfahren ist also der starke Temperaturabbau im bodennahen Bereich des Speisers bzw. Vorherdes.

Durch die entsprechend geringe Tiefe des Glasstromes bei großer Breite erfolgt innerhalb einer relativ kurzen Kühlzone K auch bei hohem Durchsatz an Farbglas ein intensiver Abbau der mittleren Temperatur, was sich durch den steilen Temperaturverlauf äußert. Dadurch steht bei gegebener Gesamtlänge der Behandlungsstrecke eine relativ große Länge für die Homogenisierungszone H zur Verfügung, in der die mittlere Temperatur weitgehend unverändert bleibt. Sowohl der steile Temperaturabfall in der Kühlzone K als auch die gleichförmige mittlere Temperatur in der Homogenisierungszone H schließen nicht aus, daß die beiderseitigen Randzonen des breiten Glasstromes zusätzlich beheizt werden, wie dies für die Kühlzone anhand der Figuren 2 bis 5 und 8 bis 10 (Brenneranordnung) dargestellt ist. Es ist lediglich dafür zu sorgen, daß durch den kombinierten Effekt von Dünnschichtkühlung, Rand- und ggf. auch Oberflächenbeheizung in Richtung auf eine möglichst homogene Temperaturverteilung eingewirkt wird. Hierfür steht aber ein verhältnismäßig sehr langer Strömungsweg in der Homogenisierungszone zur Verfügung, während in der Kühlzone die Voraussetzungen dafür geschaffen werden, daß der Glasstrom auch bereits mit nicht allzu großen Temperaturdifferenzen an den einzelnen Stellen des Strömungsquerschnitts in die Homogenisierungszone eintritt. Durch den niedrigen Füllstand bei größerer Breite B des Strömungsquerschnitts wird zusätzlich erreicht, daß die Wärmeverluste über die Seitenwände 24 verringert werden. Auch hierdurch wird die Homogenisierung verbessert und außerdem eine Energieersparnis erzielt.

In Figur 12 sind durch die Kurven 44 und 45 die Verläufe der mittleren Viskosität beim Stande der Technik (Kurve 44) und beim Erfindungsgegenstand (Kurve 45) dargestellt. Es zeigt sich, daß durch die Wirkung der Dünnschichtkühlung die mittlere Viskosität sehr viel früher angehoben wird, wodurch in Verbindung mit einer besseren Temperatur-Homogenität auch eine gleichförmigere Fließgeschwindigkeit über den gesamten Strömungsquerschnitt erreicht wird. Mit anderen Worten: Hohen Strömungsgeschwindigkeiten an Stellen hoher Temperaturen und niedrigen Viskositäten wird durch die intensive Dünnschichtkühlung systematisch entgegengewirkt, da diese sehr weitgehend sämtliche Bereiche des Strömungsquerschnitts erreicht.

Aus dem Gesamtzusammenhang ergibt sich darüber hinaus, daß es außerordentlich wichtig ist, den intensivsten Teil der Kühlzone möglichst an den Anfang der Behandlungsstrecke zu legen.

Bei der Würdigung der Erfindung sind die hohen Durchsätze bzw. mittleren Strömungsgeschwindigkeiten und Temperaturdifferenzen besonders zu beachten.

Bei Vorherden mit den üblicherweise kleinen Strömungsquerschnitten treten hohe Strömungsgeschwindigkeiten auf. Hier sind die erfindungsgemäß erreichbaren mittleren Strömungsgeschwindigkeiten von mindestens 8 m/h beachtliche Werte, wenn gleichzeitig die geforderte Homogenität erreicht wird. Erfindungsgemäß lassen sich die mittleren Strömungsgeschwindigkeiten in Vorherden sogar bis auf 17 m/h und darüber steigern, ohne daß die geforderte mittlere Temperatur T₂ und /oder die Homogenität der Glasschmelze in Frage gestellt worden wäre.

## Patentansprüche

1. Verfahren zum Konditionieren und Homogenisieren eines kontinuierlich fließenden Glasstromes (32) aus Farbglas, insbesondere aus Braunglas oder Grünglas, in einer Behandlungsstrecke (16), die in einem Vorherd (13, 14, 15) zwischen einer Einlaufstelle (VE) und einer Entnahmestelle (E) angeordnet ist und aus mindestens einer Kühlzone (K; 17, 18, 19) und einer dieser nachgeschalteten Homogenisierungszone (H, 20, 21, 22) für die Glastemperatur besteht, wobei in der Behandlungsstrecke (16) die Glastemperatur von einer Einlauftemperatur T₁ auf eine Entnahmetemperatur T₂ abgesenkt wird, vorzugsweise zum Herstellen von Formglasteilen wie Hohlglasteilen und Preßglasteilen, **dadurch gekennzeichnet,** daß in der mindestens einen Kühlzone (K; 17, 18, 19) bei einem Durchsatz von mindestens 70, vorzugsweise von mindestens 90, Tonnen pro Tag durch eine sich über die Länge der Kühlzone(n) (K; 17, 18, 19) erstreckende schwellenförmige Erhebung (23a) des Bodens (23) eine maximale Badtiefe Tₘₐₓ von 120 mm eingestellt wird, und daß in der Kühlzone die Kühlleistung so eingestellt wird, daß in der Kühlzone (K; 17, 18, 19) und vor dem Eintritt in die Homogenisierungszone (H, 20, 21, 22) die Temperatur 20 mm über dem Boden um mindestens 40 °C, vorzugsweise um mindestens 50 °C, verringert wird.

2. Verfahren nach Anspruch 1, **dadurch gekennzeichnet**, daß die maximale Tiefe Tₘₐₓ der Glasschmelze im Bereich der Kühlzone (K; 17, 18, 19) auf 100 mm eingestellt wird.

3. Verfahren nach Anspruch 1, **dadurch gekennzeichnet**, daß die maximale Tiefe Tₘₐₓ der Glasschmelze im Bereich der Kühlzone (K; 17, 18, 19) auf 80 mm eingestellt wird.

4. Vorrichtung zur Durchführung des Verfahrens nach Anspruch 1 mit einer Behandlungsstrecke (16), die in einem Vorherd (13, 14, 15) zwischen einer Einlaufstelle (VE) und einer Entnahmestelle (E) angeordnet ist und aus mindestens einer Kühlzone (K; 17, 18, 19) und einer dieser nachgeschalteten Homogenisierungszone (H, 20, 21, 22) für die Glastemperatur besteht, wobei der Boden (23) des Strömungskanals im Bereich der Kühlzone (K; 17, 18, 19) gegenüber den Nachbarbereichen des Bodens (23) mit einer schwellenförmigen Erhebung (23a) versehen ist, **dadurch gekennzeichnet**, daß sich die Erhebung (23a) des Bodens (23) über die gesamte Länge der Kühlzone (K; 17, 18, 19) erstreckt und die konstruktionsbedingte maximale Tiefe Tₘₐₓ des Strömungskanals im Bereich der Kühlzone (17, 18, 19) 120 mm beträgt und daß die Tiefe des Strömungskanals im sich anschließenden Bereich der Homogenisierungszone (H, 20, 21, 22) um mindestens 30 mm tiefer ist.

5. Vorrichtung nach Anspruch 4, **dadurch gekennzeichnet**, daß die maximale Tiefe Tₘₐₓ des Strömungskanals im Bereich der Kühlzone (K; 17, 18, 19) 100 mm beträgt.

6. Vorrichtung nach Anspruch 4, **dadurch gekennzeichnet**, daß die maximale Tiefe Tₘₐₓ des Strömungskanals im Bereich der Kühlzone (K; 17, 18, 19) 80 mm beträgt.

7. Vorrichtung nach Anspruch 4, **dadurch gekennzeichnet**, daß die Höhendifferenz der Bodenerhebung (23a) zu den Nachbarbereichen mindestens 40 mm beträgt.

8. Vorrichtung nach Anspruch 4, **dadurch gekennzeichnet**, daß oberhalb der Bodenerhebung (23a) der Kühlzone (K; 17, 18, 19) in der Decke (25) des Vorherdes (13, 15) mindestens eine Öffnung (28) angeordnet ist, und daß das Verhältnis zwischen dem Querschnitt (F1) der Öffnung (28) oder der Summe der Querschnitte (F2) der Öffnung (28) oder der Summe der Querschnitte (F1, F2, ... Fn) aller Öffnungen und der Oberfläche (FB) der Bodenerhebung (23a) mindestens 30 % beträgt.

9. Vorrichtung nach Anspruch 8, **dadurch gekennzeichnet**, daß das Verhältnis (F1 + F2 + ... Fn) : (FB) mindestens 40 % beträgt.

10. Vorrichtung nach Anspruch 8, **dadurch gekennzeichnet**, daß das Verhältnis (F1 + F2 + ... Fn) : (FB) mindestens 50 % beträgt.

11. Vorrichtung nach Anspruch 8, **dadurch gekennzeichnet**, daß das Verhältnis (F1 + F2 + ... Fn) : (FB) mindestens 60 % beträgt.

12. Vorrichtung nach Anspruch 8, **dadurch gekennzeichnet**, daß das Verhältnis (F1 + F2 + ... Fn) : (FB) mindestens 70 % beträgt.

13. Vorrichtung nach Anspruch 4, **dadurch gekennzeichnet**, daß in Strömungsrichtung hinter der Erhebung (23a) ein Tauchkühler (37) angeordnet ist.

14. Vorrichtung nach Anspruch 13, **dadurch gekennzeichnet**, daß der Tauchkühler (37) heb- und senkbar angeordnet ist.

15. Vorrichtung nach Anspruch 13, **dadurch gekennzeichnet**, daß der Tauchkühler (37) waagerecht quer zur Strömungsrichtung periodisch verschiebbar angeordnet ist.

16. Vorrichtung nach Anspruch 13, **dadurch gekennzeichnet**, daß der Tauchkühler (37) als Rührwerk ausgebildet ist.

## Claims

1. Process for conditioning and homogenising a continuously flowing glass flow (32) of coloured glass, in particular of brown glass or green glass, in a treatment section (16) disposed in a forehearth (13, 14, 15) between an entry point (VE) and a removal point (E) and comprising at least one cooling zone (K; 17, 18, 19) and a homogenising zone (H, 20, 21, 22) for the glass temperature connected downstream thereof, wherein in the treatment section (16), the glass temperature is reduced from an inlet temperature T₁ to an outlet temperature T₂, preferably for the production of moulded glass parts such as hollow glass parts and pressed glass parts, characterised in that in the case of a throughput of at least 70, preferably of at least 90, tons per day, a maximum bath depth Tₘₐₓ of 120 mm is set in the at least one cooling zone (K; 17, 18, 19) by a sill-like raised section (23a) of the base (23) extending over the length of the cooling zone(s) (K; 17, 18, 19), and that in the cooling zone the cooling capacity is adjusted so that the temperature 20 mm above the base is reduced by at least 40°C, preferably by at least 50°C, in the cooling zone (K; 17, 18, 19) and before entry in the homogenising zone (H, 20, 21, 22).

2. Process according to Claim 1, characterised in that the maximum depth Tₘₐₓ of the glass melt in the region of the cooling zone (K; 17, 18, 19) is set at 100 mm.

3. Process according to Claim 1, characterised in that the maximum depth Tₘₐₓ of the glass melt in the region of the cooling zone (K; 17, 18, 19) is set at 80 mm.

4. Apparatus for carrying out the process according to Claim 1 with a treatment section (16) disposed in a forehearth (13, 14, 15) between an entry point (VE) and a removal point (E) and comprising at least one cooling zone (K; 17, 18, 19) and a homogenising zone (H, 20, 21, 22) for the glass temperature connected downstream thereof, wherein the base (23) of the flow channel is provided with a sill-like raised section (23a) in the region of the cooling zone (K; 17, 18, 19) opposite the neighbouring regions of the base (23), characterised in that the raised section (23a) of the base (23) extends over the entire length of the cooling zone (K; 17, 18, 19) and the design-related maximum depth Tₘₐₓ of the flow channel in the region of the cooling zone (17, 18, 19) amounts to 120 mm, and that the depth of the flow channel in the adjoining region of the homogenising zone (H, 20, 21, 22) is at least 30 mm deeper.

5. Apparatus according to Claim 4, characterised in that the maximum depth Tₘₐₓ of the flow channel in the region of the cooling zone (K; 17, 18, 19) amounts to 100 mm.

6. Apparatus according to Claim 4, characterised in that the maximum depth Tₘₐₓ of the flow channel in the region of the cooling zone (K; 17, 18, 19) amounts to 80 mm.

7. Apparatus according to Claim 4, characterised in that the difference in height of the raised section (23a) of the base in relation to the neighbouring regions amounts to at least 40 mm.

8. Apparatus according to Claim 4, characterised in that at least one opening (28) is provided in the ceiling (25) of the forehearth (13, 15) above the raised section (23a) of the base of the cooling zone (K; 17, 18, 19), and that proportion of the cross-section (F1) of the opening (28), or the sum of the cross-sections (F2) of the opening (28), or the sum of the cross-sections (F1, F2, ... Fn) of all openings, in relation to the surface (FB) of the raised section (23a) of the base amounts to at least 30%.

9. Apparatus according to Claim 8, characterised in that the proportion (F1 + F2 + ... Fn) in relation to (FB) amounts to at least 40%.

10. Apparatus according to Claim 8, characterised in that the proportion (F1 + F2 + ... Fn) in relation to (FB) amounts to at least 50%.

11. Apparatus according to Claim 8, characterised in that the proportion (F1 + F2 + ... Fn) in relation to (FB) amounts to at least 60%.

12. Apparatus according to Claim 8, characterised in that the proportion (F1 + F2 + ... Fn) in relation to (FB) amounts to at least 70%.

13. Apparatus according to Claim 4, characterised in that an immersion cooler (37) is disposed behind the raised section (23a) in the direction of flow.

14. Apparatus according to Claim 13, characterised in that the immersion cooler (37) is arranged so that it may be raised and lowered.

15. Apparatus according to Claim 13, characterised in that the immersion cooler (37) is arranged so that it may be periodically displaced horizontally transversely to the direction of flow.

16. Apparatus according to Claim 13, characterised in that the immersion cooler (37) is constructed as a stirring device.

## Revendications

1. Procédé pour le conditionnement et l'homogénéisation d'un courant de verre (32), s'écoulant en continu, de verre coloré, en particulier de verre brun ou de verre vert, dans une ligne de traitement (16) qui est disposée dans un avant-creuset (13, 14, 15) entre une position d'introduction (VE) et une position de prélèvement (E) et qui est constituée d'au moins une zone de refroidissement (K; 17, 18, 19) et d'une zone d'homogénéisation (H, 20, 21, 22) pour la température du verre, placée en aval, procédé dans lequel, sur la ligne de traitement (16), la température du verre s'abaisse d'une température d'introduction T₁, à une température de prélèvement T₂, de préférence pour la fabrication d'objets en verre moulé comme des objets en verre creux et des objets en verre filé, caractérisé par le fait que, dans la zone de refroidissement, dont il y a au moins une, (K; 17, 18, 19), pour un débit d'au moins 70, de préférence d'au moins 90 tonnes par jour, il s'établit, grâce à une éminence (23a) du fond (23), en forme de seuil, s'étendant sur la longueur de la zone ou des zones de refroidissement (K; 17, 18, 19), une profondeur maximale du bain Tₘₐₓ de 120 mm, et que, dans la zone de refroidissement, le réglage de la puissance de refroidissement se fait de façon que, dans la zone de refroidissement (K; 17, 18, 19) et avant l'entrée dans la zone d'homogénéisation (H, 20, 21, 22), la température, à 20 mm au-dessus du fond, est diminuée d'au moins 40°C, de préférence d'au moins 50°C.

2. Procédé selon la revendication 1, caractérisé par le fait qu'au voisinage de la zone de refroidissement (K; 17, 18, 19), la profondeur maximale Tₘₐₓ du bain de verre en fusion s'établit à 100 mm.

3. Procédé selon la revendication 1, caractérisé par le fait qu'au voisinage de la zone de refroidissement (K; 17, 18, 19), la profondeur maximale Tₘₐₓ du bain de verre en fusion s'établit à 80 mm.

4. Appareil pour la mise en oeuvre du procédé selon la revendication 1, comportant une ligne de traitement (16) qui est disposée dans un avant-creuset (13, 14, 15) entre une position d'introduction (VE) et une position de prélèvement (E) et qui est constituée d'au moins une zone de refroidissement (K; 17, 18, 19) et d'une zone d'homogénéisation (H, 20, 21, 22) pour la température du verre, placée en aval, procédé dans lequel le fond (23) du canal d'écoulement comporte, dans le domaine de la zone de refroidissement (K; 17, 18, 19) une éminence en forme de seuil (23a) par rapport aux domaines voisins du fond (23), caractérisé par le fait que l'éminence (23a) du fond (23) s'étend sur toute la longueur de la zone de refroidissement (K; 17, 18, 19) et que la profondeur maximale, Tₘₐₓ, imposée de construction, dans le domaine de la zone de refroidissement (17, 18, 19) vaut 120 mm et que la profondeur du canal d'écoulement dans le domaine, qui s'y raccorde, de la zone d'homogénéisation (H, 20, 21, 22) est plus profonde d'au moins 30 mm.

5. Appareil selon la revendication 4, caractérisé par le fait que la profondeur maximale Tₘₐₓ du canal d'écoulement dans le domaine de la zone de refroidissement (K; 17, 18, 19) vaut 100 mm.

6. Appareil selon la revendication 4, caractérisé par le fait que la profondeur maximale Tₘₐₓ du canal d'écoulement dans le domaine de la zone de refroidissement (K; 17, 18, 19) vaut 80 mm.

7. Appareil selon la revendication 4, caractérisé par le fait que la différence de hauteur entre l'éminence du fond (23a) et les domaines voisins vaut 40 mm.

8. Appareil selon la revendication 4, caractérisé par le fait qu'au-dessus de l'éminence du fond (23a) de la zone de refroidissement (K; 17, 18, 19), dans le plafond (25) des avant-creusets (13, 15) est disposée au moins une ouverture (28) et que le rapport entre la section (F1) de l'ouverture (28) ou le total des sections (F2) de l'ouverture (28) ou le total des sections (F1, F2,... Fn) de toutes les ouvertures et la surface (FB) de l'éminence du fond (23a) vaut au moins 30%.

9. Appareil selon la revendication 8, caractérisé par le fait que le rapport (F1 + F2 + ... Fn) : (FB) vaut au moins 40%.

10. Appareil selon la revendication 8, caractérisé par le fait que le rapport (F1 + F2 + ... Fn): (FB) vaut au moins 50%.

11. Appareil selon la revendication 8, caractérisé par le fait que le rapport (F1 + F2 + ... Fn) : (FB) vaut au moins 60%.

12. Appareil selon la revendication 8, caractérisé par le fait que le rapport (F1 + F2 + ... Fn) : (FB) vaut au moins 70%.

13. Appareil selon la revendication 4, caractérisé par le fait que derrière l'éminence (23a), dans le sens de l'écoulement, est disposé un plongeur de refroidissement (37).

14. Appareil selon la revendication 13, caractérisé par le fait que le plongeur de refroidissement (37) est disposé avec possibilité de monte et baisse.

15. Appareil selon la revendication 13, caractérisé par le fait que le plongeur de refroidissement (37) est disposé horizontalement avec liberté de coulisser périodiquement transversalement par rapport à la direction de l'écoulement.

16. Appareil selon la revendication 13, caractérisé par le fait que le plongeur de refroidissement (37) est conçu sous forme d'un agitateur.
